# FASCICULE DE BREVET EUROPEEN

(11) **EP 2 019 006 B1**
(45) Date de publication et mention de la délivrance du brevet: **21.11.2012**
(21) Numéro de dépôt: 08159944.1
(22) Date de dépôt: 08.07.2008
(51) Int. Cl.: B60S 1/04, B60S 1/38

(54) **Dispositif d'essuyage aérodynamique pour vitre de véhicule automobile**
Vorrichtung zur aerodynamischen Scheibenreinigung von Kraftfahrzeugen
Aerodynamic wiping device for automobile window

(30) Priorité: 26.07.2007 FR 0705482
(43) Date de publication de la demande: 28.01.2009
(73) Titulaire: VALEO SYSTEMES D'ESSUYAGE, 78321 La Verrière (FR)
(72) Inventeur: Moreau, Stéphane, VALEO SYSTEMES D'ESSUYAGE, 75004 Paris (FR); Jallet, Sébastien, VALEO SYSTEMES D'ESSUYAGE, 78310 Maurepas (FR); Demory, Bruno, VALEO SYSTEMES D'ESSUYAGE, 95490 Vaureal (FR); Calluiere, Johan, VALEO SYSTEMES D'ESSUYAGE, 78321 Le Mesnil-Saint-Denis (FR)
(74) Mandataire: Rosolen-Delarue, Katell

(56) Documents cités:
- WO-A-02/09986
- FR-A- 2 843 573
- FR-A- 2 868 747
- US-B1- 6 622 339

## Description

La présente invention concerne un dispositif d'essuyage pour véhicule automobile à performances aérodynamiques améliorées.

On connaît déjà, notamment du document FR 2 868 747 au nom de la Demanderesse, un dispositif d'essuyage dans lequel le balai d'essuyage, de type connu dans le domaine sous la terminologie anglo-saxonne « flat-blade », présente un profil particulier, et plus précisément un élément formant déflecteur aérodynamique, permettant au flux d'air auquel est soumis le dispositif lorsque le véhicule automobile roule de plaquer le balai d'essuyage de manière plus accentuée contre le pare-brise, évitant ainsi les risques que le balai ne se soulève.

Dans cette technologie de balais d'essuyage dits « flat-blade », les performances aérodynamiques peuvent encore être améliorées en prévoyant en outre que le bras du dispositif supportant le balai d'essuyage présente lui aussi un profil aérodynamique particulier. On connaît du document FR 2 843 573 un dispositif d'essuyage comportant un bras portant de manière articulée un balai sans articulation, de type balai plat. Le balai présente un côté attaqué par un flux d'air en forme de déflecteur, et le bras est positionné, en section transversale, à une faible distance au-dessus du balai. Pour permettre l'application d'une force de plaquage du bras vers le pare-brise, le bras présente en outre un profil de surface déportante dont la zone de dépression est tournée vers le balai, et située entre le bras et le balai. Dans ce document, la force de plaquage du bras vient s'ajouter à celle du balai, et la force de plaquage du balai contre la vitre est augmentée du fait notamment que l'espace intermédiaire entre la partie supérieure du balai formant déflecteur et la partie inférieure de la surface déportante du bras se rétrécit dans la direction d'écoulement du flux d'air.

Plus précisément, le bras est destiné à être positionné par rapport au balai et à la vitre du véhicule de sorte que, dans un même plan de section transversale orthogonal à la vitre, le bord de fuite du profil de surface déportante est situé en aval du bord de fuite du déflecteur du balai dans le sens de l'écoulement. En outre, les deux points d'arrêt respectivement du profil de surface déportante et du déflecteur du balai sont définis pour être séparés d'une distance maximale prédéfinie, et le profil de surface déportante est incliné par rapport à la vitre. La combinaison des caractéristiques précédentes permet de créer, entre le profil de surface déportante et le déflecteur du balai, un canal d'écoulement dont la section se rétrécit dans le sens de l'écoulement, et une zone de dépression du profil de surface déportante située dans un espace entre le bord inférieur du profil et le balai.

Ainsi, le principe permettant d'améliorer l'aérodynamisme selon ce document, repose sur une synergie entre la surface déportante du bras et le déflecteur du balai.

Il en résulte que les effets escomptés d'un dispositif d'essuyage conforme au document FR 2 843 573 ne peuvent être obtenus que pour des profils très particuliers tant du bras que du balai en synergie. Ceci constitue une limitation du fait qu'il est difficile d'envisager la fabrication d'un bras standard susceptible de fonctionner avec différents balais d'essuyage.

Document US-B-6622339 montre un dispositif d'essayage comme décrit dans le préambule de la première revendication.

La présente invention a pour but de pallier aux limitations précédentes grâce à un nouvel agencement des différents constituants du dispositif d'essuyage.

Ainsi, la présente invention a pour objet un dispositif d'essuyage pour vitre de véhicule automobile, comportant un bras portant de manière articulée un balai sans articulation, de type balai plat, le balai comportant un côté en forme de déflecteur dont la section transversale présente un point d'arrêt et un bord de fuite opposé audit point d'arrêt dans le sens de l'écoulement d'un flux d'air, et le bras comportant un profil de surface déportante dont la section transversale présente aussi un point d'arrêt et un bord de fuite opposé audit point d'arrêt dans le sens de l'écoulement dudit flux d'air, caractérisé en ce que, en position montée sur le véhicule, le bras est destiné à être positionné par rapport au balai et à la vitre du véhicule de sorte que, dans un même plan de section transversale orthogonal à la vitre :
- le bord de fuite du profil de surface déportante est situé en amont du bord de fuite du déflecteur du balai dans le sens de l'écoulement ; et
- le profil de surface déportante est incliné par rapport à la vitre d'un angle d'inclinaison prédéfini et présente un bord inférieur situé à une distance prédéfinie de la vitre ;
de façon à créer entre le profil de surface déportante et le déflecteur du balai un canal d'écoulement de section sensiblement constante et une zone de dépression du profil de surface déportante située dans un espace entre le bord inférieur et la vitre ne contenant pas le balai.

D'autres avantages et caractéristiques de la présente invention apparaîtront au vu de la description suivante d'un exemple de réalisation non limitatif d'un dispositif d'essuyage conforme à l'invention, faite en référence aux figures annexées, dans lesquelles :
- la figure 1 illustre schématiquement, dans un plan de section transversale orthogonal à une vitre de véhicule automobile, les lignes d'écoulement du flux d'air ainsi que les zones de dépression ou de surpression caractéristiques d'un dispositif d'essuyage selon l'invention ;
- la figure 2 illustre schématiquement les caractéristiques de positionnement des différents éléments constitutifs du dispositif d'essuyage selon l'invention ;
- la figure 3a est un diagramme illustrant la traînée totale obtenue pour le dispositif de la figure 2, pour différentes valeurs d'orientation, et différentes valeurs de l'espacement entre le bras et la vitre ;
- la figure 3b est un diagramme illustrant la portance sur balai obtenue pour le dispositif de la figure 2, pour différentes valeurs d'orientation, et différentes valeurs de l'espacement entre le bras et la vitre ;
- la figure 3c est un diagramme illustrant la portance sur bras obtenue pour le dispositif de la figure 2, pour différentes valeurs d'orientation, et différentes valeurs de l'espacement entre le bras et la vitre.

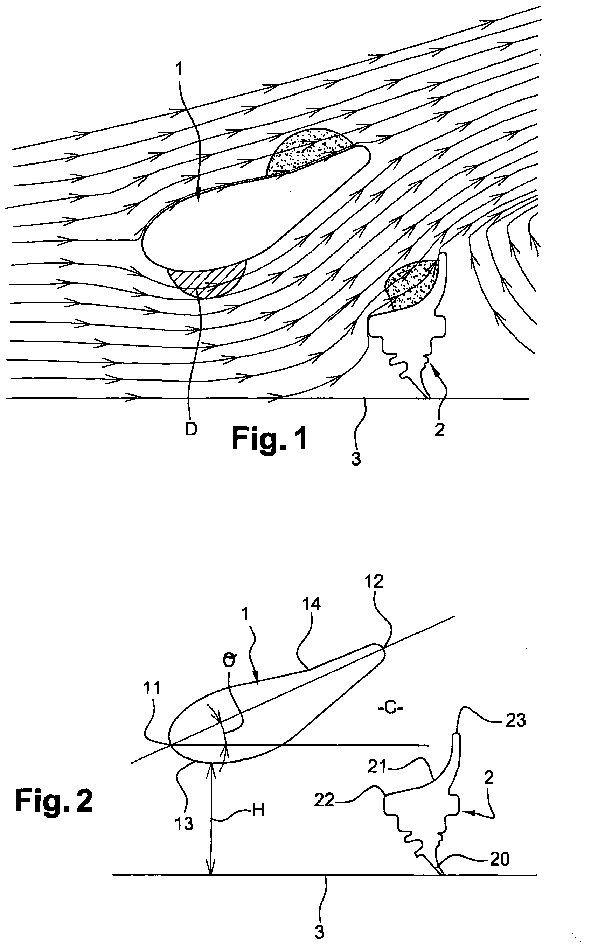

En référence aux figures 1 et 2, un dispositif d'essuyage conforme à l'invention comporte, de manière classique, un bras 1 portant de manière articulée un balai 2 sans articulation, de type balai plat. Pour les deux figures 1 et 2, le dispositif d'essuyage est représenté en section transversale dans un plan orthogonal au pare-brise ou vitre du véhicule automobile. Ainsi, la ligne horizontale en bas de chacune des figures représente le pare-brise 3. Lorsque le véhicule roule, un flux d'air s'écoule de la gauche des figures vers la droite, comme indiqué par le sens des flèches de la figure 1. Le dispositif est en outre représenté ici en fonctionnement, dans une position de retour vers la position de repos.

Le balai est du type de celui décrit dans la demande FR 2 868 747 au nom de la Demanderesse. Il comporte notamment un côté formant raclette d'essuyage 20, et un côté 21 en forme de déflecteur dont la section transversale présente un point d'arrêt 22 et un bord de fuite 23 opposé audit point d'arrêt 22 dans le sens de l'écoulement d'un flux d'air. L'inclinaison de la raclette 20 par rapport à la vitre 3 est ici due au fait que le dispositif est en fonctionnement, dans une position de retour vers sa position de repos.

Le bras 1 comporte un profil de surface déportante dont la section transversale présente aussi un point d'arrêt 11 et un bord de fuite 12 opposé audit point d'arrêt 11 dans le sens de l'écoulement dudit flux d'air. Le profil de surface déportante comporte un bord inférieur 13 qui peut être de longueur supérieure ou égale à celle de son bord supérieur 14. Combiné avec une inclinaison optimisée du profil comme cela sera expliqué par la suite, ceci permet d'obtenir une zone de surpression sur le bord supérieur (zone représentée avec des points sur la figure 1), et une zone de dépression sur le bord inférieur 13 (zone représentée avec des hachures sur la figure 1). Il convient de noter que seul le profil de surface déportante est représenté sur les figures. Le bras comporte en outre, à l'intérieur de cette surface déportante, une âme longitudinale centrale non représentée, de section de préférence elliptique, pour assurer la fonction mécanique du bras. Le profil 1, de préférence en matériau plastique, est réalisé soit par surmoulage de l'âme centrale, soit par injection et extrusion.

Conformément à l'invention, le bras 1 est agencé par rapport au balai 2 et à la vitre 3 du véhicule de sorte que, dans un même plan de section transversale orthogonal à la vitre, on retrouve les caractéristiques suivantes :
- le bord de fuite 12 du profil de surface déportante 1 est situé en amont du bord de fuite 23 du déflecteur 21 du balai dans le sens de l'écoulement ;
- le profil de surface déportante 1 est incliné d'un angle θ prédéfini par rapport à la vitre 3 et le bord inférieur 13 du profil de surface déportante est situé à une distance H prédéfinie de la vitre,
de façon à créer entre le profil de surface déportante 1 et le déflecteur 21 du balai 2 un canal d'écoulement de section sensiblement constante et une zone de dépression D du profil de surface déportante située dans un espace entre le bord inférieur 13 et la vitre 3 ne contenant pas le balai 2.

De préférence, comme représenté sur les figures 1 et 2, le bord de fuite 12 du profil de surface déportante 1 est sensiblement aligné avec le point d'arrêt 22 du déflecteur du balai 2 dans le sens de l'écoulement. On peut néanmoins tolérer que le bras soit déplacé légèrement sur la gauche ou sur la droite.

Différents tests ont été menés de manière à trouver les paramètres d'orientation (angle d'inclinaison θ) et de dimensionnement (distance H) permettant d'optimiser les performances aérodynamiques du dispositif.

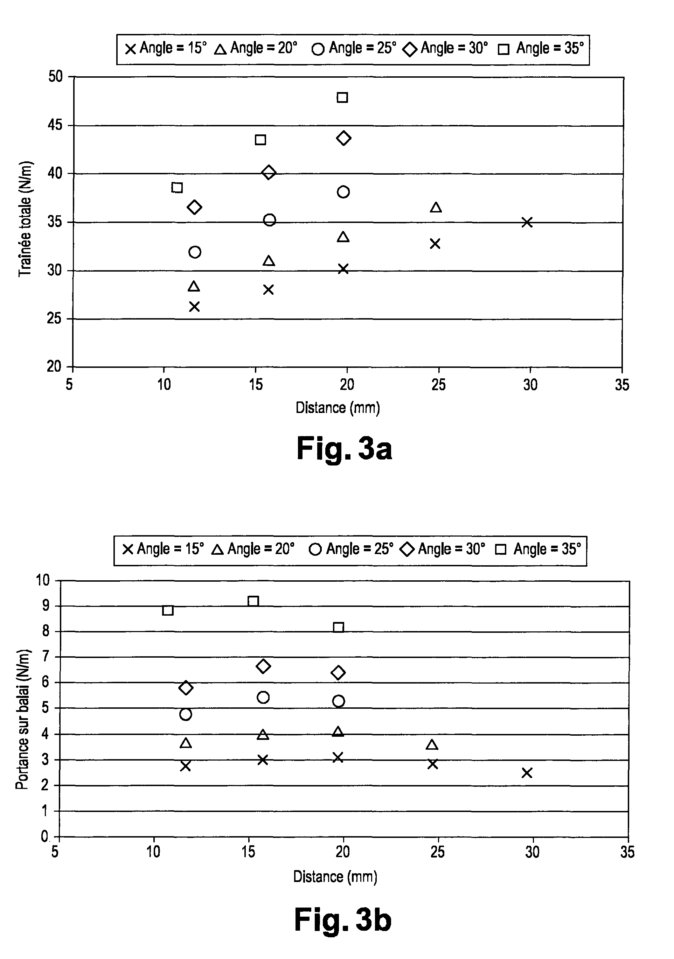

Les figures 3a à 3c illustrent les valeurs de traînée totale, de portance sur balai et de portance sur bras obtenues pour différents angles d'inclinaison θ, et pour différentes valeurs de la distance H.

L'optimisation des paramètres doit conduire simultanément aux performances suivantes :
- Obtention d'une traînée totale, correspondant à la somme de la traînée sur le bras et de la traînée sur le balai, la plus faible possible ;
- Obtention d'une portance sur balai la plus petite possible, de préférence inférieure à 6 ou 7 N /m ;
- Obtention d'une portance sur bras légèrement négative pour le plaquage.

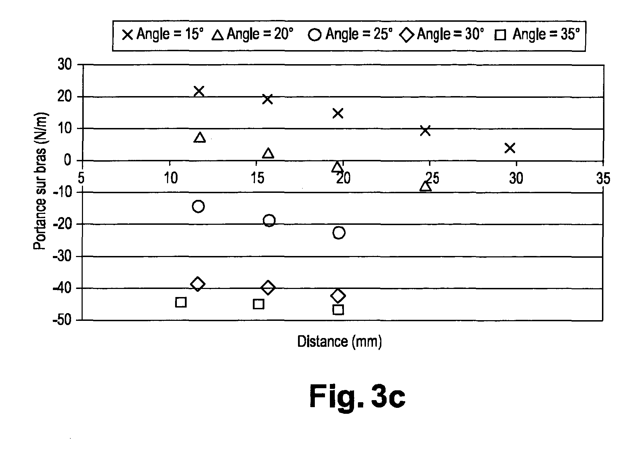

En relation avec les figures 3a et 3c, on constate notamment que lorsque l'angle d'inclinaison est trop faible, la portance sur bras a une valeur positive, ce qui correspond à un risque de soulèvement du bras. En revanche, si l'angle d'inclinaison est trop fort, la traînée totale devient trop importante, ce qui est néfaste pour le moteur d'essuyage.

Avec les contraintes précédentes, les différents essais illustrés sur les figures 3a à 3c montrent qu'un dispositif optimisé en termes d'aérodynamisme est obtenu pour un angle d'inclinaison compris entre 20° et 30°, et pour une distance H de l'ordre de 15 mm.

Le profil de surface déportante 1 comporte de préférence un bord d'attaque le plus arrondi possible. Ceci permet de conserver un bon rapport portance/traînée quelles que soient les variations de l'angle d'attaque du dispositif. Le dispositif d'essuyage peut ainsi faire partie d'un système d'essuyage avec mécanisme intégré de variation de l'angle d'attaque du balai.

En outre, le profil de surface déportante comporte un bord de fuite 12 arrondi, par exemple de diamètre sensiblement égal à 2 mm, de façon à répondre aux exigences en matière de sécurité des piétons.

## Revendications

1. Dispositif d'essuyage pour vitre de véhicule automobile, comportant un bras (1) portant de manière articulée un balai (2) sans articulation, de type balai plat, le balai (2) comportant un côté (21) en forme de déflecteur dont la section transversale présente un point d'arrêt (22) et
un bord de fuite (23) opposé audit point d'arrêt (22) dans le sens de l'écoulement d'un flux d'air, et le bras (1) comportant un profil de surface déportante dont la section transversale présente aussi un point d'arrêt (11) et un bord de fuite (12) opposé audit point d'arrêt (11) dans le sens de l'écoulement dudit flux d'air, en position montée sur te véhicule, le bras (1) étant destiné à être positionné par rapport au balai (2) et à la vitre (3) du véhicule de sorte que, dans un même plan de section transversale orthogonal à la vitre :
- le profil de surface déportante du bras (1) est incliné par rapport à la vitre (3) d'un angle d'inclinaison (θ) prédéfini et présente un bord inférieur (13) situé à une distance (H) prédéfinie de la vitre ; le dispositif étant **caractérisé en ce que** le bord de fuite (12) du profil de surface déportante du bras (1) est situé en amont du bord de fuite (23) du déflecteur du balai (2) dans le sens de l'écoulement ; de façon a créer entre le profil de surface déportante du bras (1) et le déflecteur (21) du balai (2) un canal d'écoulement (C) de section sensiblement constante et une zone de dépression (D) du profil de surface déportante située dans un espace ne contenant pas le balai (2), entre le bord inférieur (13) et la vitre (3), et **en ce que**, en position montée sur le véhicule, le bras (1) est destiné à être positionné par rapport au balai (2) et à la vitre (3) du véhicule de sorte que, dans un même plan de section transversale orthogonal à la vitre, le bord de fuite (12) du profil de surface déportante du bras (1) est sensiblement aligné avec le point d'arrêt (22) du déflecteur du balai dans le sens de l'écoulement et **en ce que** le profil de surface déportante du bras (1) comporte un bord d'attaque (11) arrondi.

2. Dispositif d'essuyage selon l'une quelconque des revendications précédentes, **caractérisé en ce que** l'angle d'inclinaison (θ) est compris entre 20° et 30°.

3. Dispositif d'essuyage selon l'une quelconque des revendications précédentes, **caractérisé en ce que** ladite distance (H) prédéfinie est de l'ordre de 15 mm.

4. Dispositif d'essuyage selon l'une quelconque des revendications précédentes, **caractérisé en ce que** le profil de surface déportante du bras (1) comporte un bord de fuite (12) arrondi de diamètre sensiblement égal à 2 mm.

## Claims

1. Wiping device for a motor-vehicle window, comprising an arm (1) articulatedly supporting a blade (2) without articulation, of the flat blade type, the blade (2) comprising one side (21) in the form of a deflector of which the cross section has a stagnation point (22) and a trailing edge (23) opposite to the said stagnation point (22) in the direction of flow of an air stream, and the arm (1) comprising a downforce-generating surface profile of which the cross section also has a stagnation point (11) and a trailing edge (12) opposite to the said stagnation point (11) in the direction of flow of the said air stream, in the mounted position on the vehicle, the arm (1) being designed to be positioned relative to the blade (2) and to the window (3) of the vehicle such that, in one and the same cross-sectional plane orthogonal to the window:
- the downforce-generating surface profile of the arm (1) is inclined relative to the window (3) at a predefined angle of inclination (θ) and has a bottom edge (13) situated at a predefined distance (H) from the window; the device being **characterized in that**
- the trailing edge (12) of the downforce-generating surface profile of the arm (1) is situated upstream of the trailing edge (23) of the blade deflector (2) in the direction of flow so as to create between the downforce-generating surface profile of the arm (1) and the deflector (21) of the blade (2) a flow channel (C) of substantially constant cross section and a zone of negative pressure (D) of the downforce-generating surface profile situated in a space not containing the blade (2), between the bottom edge (13) and the window (3), and **in that**, in the mounted position on the vehicle, the arm (1) is designed to be positioned relative to the blade (2) and to the window (3) of the vehicle such that, in one and the same cross-sectional plane orthogonal to the window, the trailing edge (12) of the downforce-generating surface profile of the arm (1) is substantially in line with the stagnation point (22) of the blade deflector in the direction of flow, and **in that** the downforce-generating surface profile of the arm (1) comprises a rounded leading edge (11).

2. Wiping device according to Claim 1, **characterized in that** the angle of inclination (θ) is between 20° and 30°.

3. Wiping device according to either one of the preceding claims, **characterized in that** the said predefined distance (H) is of the order of 15 mm.

4. Wiping device according to any one of the preceding claims, **characterized in that** the downforce-generating surface profile of the arm (1) comprises a rounded trailing edge (12) with a diameter substantially equal to 2 mm.

## Patentansprüche

1. Kraftfahrzeugscheibenwischvorrichtung mit einem Arm (1), der ein Blatt (2) ohne Gelenk der Flachwischerblattart angelenkt trägt, wobei das Blatt (2) eine Seite (21) mit Deflektorform umfasst, deren Querschnitt einen Haltepunkt (22) und eine dem Haltepunkt (22) in der Strömungsrichtung eines Luftstroms gegenüberliegende Hinterkante (23) aufweist, und wobei der Arm (1) ein Abtriebsflächenprofil umfasst, dessen Querschnitt ebenfalls einen Haltepunkt (11) und eine dem Haltepunkt (11) in der Strömungsrichtung des Luftstroms gegenüberliegende Hinterkante (12) aufweist, wobei der Arm (1) in am Fahrzeug montierter Position dazu bestimmt ist, so bezüglich des Blatts (2) und der Scheibe (3) des Fahrzeugs positioniert zu sein, dass in derselben orthogonal zur Scheibe verlaufenden Querschnittsebene
- das Abtriebsflächenprofil des Arms (1) in einem vordefinierten Neigungswinkel (θ) bezüglich der Scheibe (3) geneigt ist und eine untere Kante (13) aufweist, die in einem vordefinierten Abstand (H) von der Scheibe angeordnet ist,
**dadurch gekennzeichnet, dass**
- die Hinterkante (12) des Abtriebsflächenprofils des Arms (1) in Strömungsrichtung stromaufwärts von der Hinterkante (23) des Deflektors des Blatts (2) angeordnet ist, so dass zwischen dem Abtriebsflächenprofil des Arms (1) und dem Deflektor (21) des Blatts (2) ein Strömungskanal (C) mit im Wesentlichen konstantem Querschnitt und ein Vertiefungsbereich (D) des Abtriebsflächenprofils geschaffen wird, der in einem das Blatt (2) nicht enthaltenden Raum zwischen der unteren Kante (13) und der Scheibe (3) enthalten ist, und dass der Arm (1) in am Fahrzeug montierter Position dazu bestimmt ist, so bezüglich des Blatts (2) und der Scheibe (3) des Fahrzeugs positioniert zu sein, dass in derselben orthogonal zur Scheibe verlaufenden Querschnittsebene die Hinterkante (12) des Abtriebsflächenprofils des Arms (1) in Strömungsrichtung im Wesentlichen auf den Haltepunkt (22) des Deflektors des Blatts ausgerichtet ist, und dass das Abtriebsflächenprofil des Arms (1) eine abgerundete Vorderkante (11) umfasst.

2. Wischvorrichtung nach Anspruch 1, **dadurch gekennzeichnet, dass** der Neigungswinkel (θ) zwischen 20° und 30° beträgt.

3. Wischvorrichtung nach einem der vorhergehenden Ansprüche, **dadurch gekennzeichnet, dass** der vordefinierte Abstand (H) ungefähr 15 mm beträgt.

4. Wischvorrichtung nach einem der vorhergehenden Ansprüche, **dadurch gekennzeichnet, dass** das Abtriebsflächenprofil des Arms (1) eine abgerundete Hinterkante (12) mit einem Durchmesser umfasst, der im Wesentlichen gleich 2 mm ist.
